# EUROPÄISCHE PATENTSCHRIFT

(11) **EP 2 598 859 B1**
(45) Veröffentlichungstag und Bekanntmachung des Hinweises auf die Patenterteilung: **04.10.2017**
(21) Anmeldenummer: 11733869.9
(22) Anmeldetag: 19.07.2011
(51) Int. Cl.: B01L 3/00, G01N 21/05, G01N 21/64, B01F 5/06, B01F 13/00, B01F 13/10, G01N 21/03

(54) **MESSKASSETTE UND MESSVORRICHTUNG FÜR DIE DETEKTION VON ZIELMOLEKÜLEN IN EINER FLÜSSIGEN PROBE DURCH MESSUNG VON FLUORESZENZEMISSION NACH ANREGUNG IM EVANESZENTEN FELD**
MEASURING CASSETTE AND MEASURING APPARATUS FOR DETECTING TARGET MOLECULES IN A LIQUID SAMPLE BY MEASURING FLUORESCENCE EMISSION FOLLOWING EXCITATION IN THE EVANESCENT FIELD
CASSETTE DE MESURE ET DISPOSITIF DE MESURE POUR LA DÉTECTION DE MOLÉCULES CIBLES DANS UN ÉCHANTILLON LIQUIDE, PAR MESURE DE L'ÉMISSION DE FLUORESCENCE APRÈS EXCITATION DANS UN CHAMP ÉVANESCENT

(30) Priorität: 26.07.2010 DE 102010038431
(43) Veröffentlichungstag der Anmeldung: 05.06.2013
(73) Patentinhaber: DiaSys Diagnostic Systems GmbH, 65558 Holzheim (DE)
(72) Erfinder: SCHENK, Roland, Kirchheim 67281 (DE)
(74) Vertreter: WSL Patentanwälte Partnerschaft mbB
(86) Internationale Anmeldenummer: PCT/EP2011/062363
(87) Internationale Veröffentlichungsnummer: WO 2012/016824

(56) Entgegenhaltungen:
- EP-A1- 1 347 284
- EP-A2- 0 774 657
- EP-A2- 1 635 161
- WO-A1-2009/057024
- JP-A- 2007 003 464
- US-A1- 2010 060 998
- MAUNO SCHELB ET AL: "Fluorescence excitation on monolithically integrated all-polymer chips", JOURNAL OF BIOMEDICAL OPTICS, Bd. 15, Nr. 4, 1. Januar 2010 (2010-01-01) , Seite 041517, XP055009687, ISSN: 1083-3668, DOI: 10.1117/1.3446672
- PFLEGING W ET AL: "Laser patterning and welding of transparent polymers for microfluidic device fabrication", PROCEEDINGS OF THE SPIE, THE INTERNATIONAL SOCIETY FOR OPTICAL ENGINEERING SPIE, USA, Nr. 6107, 1. Januar 2006 (2006-01-01), Seiten 610705-1, XP002499485, ISSN: 0277-786X, DOI: 10.1117/12.646435

## Beschreibung

Die vorliegende Erfindung betrifft eine austauschbare Einweg-Messkassette zum Einbringen in eine Messvorrichtung zum Detektieren von Zielmolekülen in einer flüssigen Probe durch Messung von Fluoreszenzemission, wobei die Messkassette eine Durchflussmesszelle aufweist, in der eine von der Messvorrichtung bereitgestellte Anregungsstrahlung jenseits einer Grenzfläche von flüssiger Probe und Messzelle ein evaneszentes Feld in der flüssigen Probe erzeugt. Darüber hinaus betrifft die vorliegende Erfindung ein Verfahren zum Herstellen einer solchen Messkassette sowie eine Messvorrichtung für die Detektion von Zielmolekülen in einer flüssigen Probe durch Messung von Fluoreszenzemission nach Anregung im evaneszenten Feld, wobei die Messvorrichtung einen Einschubschacht für die vorgenannte Messkassette aufweist. Des weiteren betrifft die vorliegende Erfindung ein Verfahren zum Detektieren von Zielmolekülen in einer flüssigen Probe durch Messung von Fluoreszenzemission nach Anregung im evaneszenten Feld, bei dem man die vorgenannte Messkassette bzw. die vorgenannte Messvorrichtung einsetzt.

Mit einer Messkassette bzw. Messvorrichtung der eingangs genannten Art können Zielmoleküle in einer flüssigen Probe durch Messung von Fluoreszenzemission nach Anregung im evaneszenten Feld qualitativ oder quantitativ erfasst werden. Die genannten Zielmoleküle können entweder durch Evaneszenzfeldanregung selbst Fluoreszenzstrahlung aussenden oder - wenn sie hierzu nicht in der Lage sind - durch Verknüpfung mit einem Fluoreszenzmarker entsprechend detektierbar gemacht werden.

Bei der Fluoreszenzanregung im evaneszenten Feld wird Licht einer geeigneten Wellenlänge (Anregungsstrahlung) auf eine Grenzfläche zwischen der zu analysierenden flüssigen Probe und einer Oberfläche aus einem optisch transparenten Material gerichtet, so dass die Anregungsstrahlung totalreflektiert wird unter gleichzeitiger Erzeugung eines evaneszenten Feldes in der flüssigen Probe. Das evaneszente Feld tritt mit der flüssigen Probe in Wechselwirkung und kann in diesem Feld befindliche Fluorophore zur Fluoreszenzstrahlung anregen. Diese Fluoreszenz kann mit einem Detektor erfasst werden.

Eine Messvorrichtung, mit der diese Art der Messung durchgeführt werden kann, ist aus dem Stand der Technik bereits bekannt. So beschreiben DE 196 28 002 und DE 197 11 281 eine Vorrichtung zur Durchführung von Fluoreszenzimmunotests mittels Evaneszentfeldanregung, bei der ein Lichtstrahl in einem für die Totalreflektion geeigneten Winkel auf eine Grenzfläche eines küvettenförmig ausgebildeten Aufnahmebereichs gerichtet wird, wobei der Aufnahmebereich zwischen einer optisch transparenten Bodenplatte und einer Deckplatte angeordnet ist. Der Aufnahmebereich weist hierbei vorzugsweise eine Dicke zwischen 0,001 und 0,5 mm auf und wird von einem zwischen der Bodenplatte und der Deckplatte angeordneten Abstandshalter definiert. Der Abstandshalter ist dabei bevorzugt eine dünne Folie, die beidseitig mit einem Klebefilm versehen ist, oder ein dünner Klebefilm, der zum einen auf die Bodenplatte und zum anderen auf die Deckplatte klebbar ist.

Bei den oben beschriebenen Vorrichtungen aus dem Stand der Technik erfolgt die Anregungsstrahlung durch die transparente Bodenplatte, und der Austritt der Fluoreszenzemission erfolgt ebenfalls durch die transparente Bodenplatte nach unten. Dem entsprechend ist der Detektor und die Anregungsquelle zur Erfassung der Fluoreszenzemission unterhalb der aus Bodenplatte, Abstandshalter und Abdeckplatte gebildeten Messzelle angeordnet.

Ein Nachteil des Systems aus dem Stand der Technik mit Klebefolie oder Klebefilm ist, dass Klebefolie und Klebefilm nur eine begrenzte Lagerstabilität aufweisen, so dass es bei langer Lagerdauer hier zu Materialveränderungen kommen kann, die unter Umständen sogar dazu führen können, dass an der Messzelle undichte Stellen auftreten, beispielsweise durch kleine Risse in der Klebefolie bzw. dem Klebefilm. Treten solche undichten Stellen auf, kann gegebenfallsflüssige Probe aus der Messzellanordnung austreten und in die Messvorrichtung gelangen. Bei den oben beschriebenen Vorrichtungen aus dem Stand der Technik könnte die Probe hierbei beispielsweise auf den unter der Messzelle angeordneten Fluoreszenzemissionsdetektor oder die ebenfalls in diesem Bereich angeordnete Anregungsquelle tropfen, was zu einer Beeinträchtigung der Fluoreszenzdetektion und damit zu einer Beeinträchtigung aller weiteren Messungen führen kann.

Weiterhin kann eine derartige Vorrichtung mit einem Klebefilm nur unter großem manuellen Aufwand hergestellt werden, da das Aufbringen des Klebefilm nur schlecht automatisierbar ist.

Im Übrigen besteht der Klebefilm üblicherweise aus einem flexiblen Material, welches sich im Laufe der Zeit unter Umständen entspannt, wodurch sich die Höhe der Messzelle verändern kann. Die aus dem Stand der Technik bekannten Systeme mit Klebefolie oder Klebefilm haben daher auch den Nachteil, dass die Höhe der Messzelle über die Zeit und in Abhängigkeit von der Höhe des Druckes der auf der Bodenplatte und dem Deckel lastet variieren kann, was mit ungewünschten Messungenauigkeiten verbunden sein kann.

Es bestand daher ein Bedarf nach einer Verbesserung der aus dem Stand der Technik bekannten Vorrichtungen zum Detektieren von Zielmolekülen in einer flüssigen Probe durch Messung von Fluoreszenzemission, um zu gewährleisten, dass aus dem Bereich, in dem die Messzelle, in der die flüssige Probe zur Fluoreszenzemission angeregt wird, angeordnet ist, keine Probenflüssigkeit zum Fluoreszenzdetektor gelangen kann. Der Artikel von M. Schelb et al. "Fluorescence excitation on monolithically integrated allpolymer chips", Journal of Biomedical Optics 15(4), Juli/August 2010, beschreibt ein Messsystem zur Messung der Fluoreszenz nach Anregung im evaneszenten Feld, das einen optofluidischen Chip aufweist, der durch Laserschweißen von zwei einstückigen Bauteilen hergestellt ist.

Die vorliegende Erfindung stellt eine Vorrichtung zum Detektieren von Zielmolekülen in einer flüssigen Probe durch Messung von Fluoreszenzemission bereit, bei der besser gewährleistet ist, dass keine Probenflüssigkeit aus der Messzelle in die Messvorrichtung gelangen kann, insbesondere nicht zum Fluoreszenzdetektor oder zur Anregungsquelle. Die Erfindung ist durch die unabhängigen Ansprüche definiert.

Die Messzelle der erfindungsgemäßen Messkassette ist im Gegensatz zu der Messzelle, der aus dem Stand der Technik bekannten Vorrichtungen, so aufgebaut, dass der optisch transparente Bereich an deren Oberseite durch das optisch transparente Material des Korpus vorgesehen ist. Dem entsprechend erfolgt die Fluoreszenzanregung und Fluoreszenzmessung durch das optisch transparente Material des Korpus von oben. Dem entsprechend kann der Fluoreszenzdetektor über dem Messzellenbereich angeordnet werden, wodurch vermieden wird, dass aus dem Bereich der Messzelle austretende Probenflüssigkeit zum Fluoreszenzdetektor gelangt. Außerdem werden die optischen Komponenten, wenn Sie unterhalb der Messzelle angeordnet sind, leichter durch Staub verunreinigt. Bei der Verwendung einer von oben arbeitenden Optik ist die Gefahr der Kontamination der optischen Bauteile mit Staub deutlich geringer.

Um zusätzlich sicherzustellen, dass aus dem Bereich der Messzelle keine Probenflüssigkeit in die Messvorrichtung gelangen kann, sieht die vorliegende Erfindung außerdem vor, dass die Teile der Messkassette, die die Messzelle ausbilden, durch Laserschweißen unmittelbar und fluiddicht miteinander verbunden sind. Etwas genauer sieht die vorliegende Erfindung vor, dass die Messkassette für Zwecke der Ausbildung einer Messzelle einen Korpus aus einem optisch transparenten Material und einen an der Unterseite des Korpus anliegenden Boden umfasst. Die Messzelle wird dabei entweder von einer Aussparung gebildet, die im transparenten Material des Korpus vorgesehen ist, oder von einer Aussparung, die im Boden vorgesehen ist. Die Aussparung wird dabei von dem jeweils anderen Bauteil (Boden bzw. Korpus) abgedeckt. Alternativ kann die Aussparung auch sowohl im Korpus als auch im Boden vorgesehen sein, wobei der ausgesparte Bereich auf der einen Seite (z.B. im Korpus) und der ausgesparte Bereich auf der anderen Seite (z.B. im Boden) gemeinsam die Aussparung definieren, die den Raum der Messzelle bildet.

In jedem Falle sind die um die Aussparung herum vorliegenden aneinander liegenden Flächen des Korpus und des Bodens durch Laserschweißen unmittelbar und fluiddicht miteinander verbunden. Die Verbindung durch Laserschweißen hat gegenüber dem Verkleben der Messzellenbauteile - wie es im vorgenannten Stand der Technik vorgesehen ist - den Vorteil, dass hierdurch eine unmittelbare Verbindung zwischen den Bauteilen erzeugt wird, ohne dass zwischen den Bauteilen eine Schicht aus einem anderen Material vorliegt.

Die erfindungsgemäße Verbindung durch Laserschweißen stellt absolut sicher, dass die Messzelle gegenüber der in der Messzelle befindlichen Flüssigkeit dicht ist. Die absolute Dichtheit ist dabei auch dann gewährleistet, wenn die Flüssigkeit in der Messzelle unter Druck steht, wenn z.B. die Probenflüssigkeit durch die Messzelle mit Druck bewegt wird. Beispielsweise gewährleistet die erfindungsgemäße Messkassette absolute Dichtheit auch bei einem Druck von bis zu 300 mbar. Dies gilt umgekehrt auch für eine negative Drucksituation in der Messzelle. Wird beispielsweise in der Messzelle ein Unterdruck von bis zu -300 mbar erzeugt, so ist gewährleistet, dass durch die fluiddicht abgeschlossene Messkassette von außen keine Luft in die Messzelle gelangen kann.

Darüber hinaus weist die Verbindung durch Laserschweißen eine deutlich höhere Langzeitstabilität als die aus dem Stand der Technik bekannte Verbindung über eine Klebefolie bzw. einen Klebefilm auf.

Die Verbindung von den die Messzelle definierenden Bauteilen durch Laserschweißen ist außerdem auch fertigungstechnisch von Vorteil, da nur zwei Bauteile verarbeitet werden, ohne dass zwischen diesen Bauteilen noch eine Folie oder eine Klebstoffschicht in der erforderlichen Gestalt angeordnet bzw. aufgebracht werden muss. Damit ist eine bessere Automatisierbarkeit der Produktion der erfindungsgemäßen Messkassette möglich.

Darüber hinaus ist diese Gestaltung bedienerfreundlicher, da hierdurch bei den entsprechenden Vorrichtungen aus dem Stand der Technik erforderliche Reinigungsschritte wegfallen. Denn, wenn der Klebefilm bei den bekannten Vorrichtungen einmal undicht geworden ist, müssen alle unterhalb der Messzelle liegenden optischen Komponenten gereinigt werden.

Der Begriff "optisch transparent" wird hier so verwendet, dass ein optisch transparentes Material sowohl für die Anregungsstrahlung als auch für die Fluoreszenzemission transparent ist. Vorzugsweise ist das transparente Material des Korpus Glas oder ein optisch transparenter Kunststoff. Im Falle von Kunststoffen können diese beispielsweise ausgewählt sein unter Polycarbonate (PC), Poly(methylmethacrylate) (PMMA, Rohaglas) und Polyolefine (Topas, COC). Vorzugsweise handelt es sich im Falle von Kunststoff um einen für das Laserschweißen geeigneten Kunststoff, wobei für das Laserschweißen geeignete optisch transparente Kunststoffe dem Fachmann bekannt sind.

Das Material, aus dem der Boden besteht ist vorzugsweise ein Kunststoff. Besonders bevorzugt ist der Kunststoff ein Poly(methylmethacrylat) (PMMA) oder ein Polyolefin.

Handelt es sich bei dem Material des Korpus um Glas oder einen nicht für das Laserschweißen geeigneten Kunststoff, so muss das Material des Bodens aus einem für das Laserschweißen geeigneten Kunststoff bestehen. Besteht dagegen der Boden aus einem nicht für das Laserschweißen geeigneten Material, so muss das Material des Korpus ein für das Laserschweißen geeignetes Kunststoffmaterial sein. Besonders bevorzugt handelt es sich beim Korpusmaterial und beim Bodenmaterial um dasselbe für das Laserschweißen geeignete Kunststoffmaterial.

Vorteilhafterweise sind Korpus und Boden jeweils Einkomponententeile, die vorzugsweise im Spritzgussverfahren hergestellt sind. Dies hat den Vorteil, dass diese Bauteile keine Nähte oder Übergangsstellen zwischen verschiedenen Materialien aufweisen, an denen es möglicherweise - vor allem dann, wenn in dem System positiver oder negativer Druck aufgebaut wird - Probenflüssigkeit austreten oder Luft gezogen werden könnte.

An der Grenzfläche zwischen dem optisch transparenten Material des Korpus und der Probenflüssigkeit sind im optischen Bereich vorzugsweise Fängermoleküle angeordnet, die die interessierenden Moleküle aus der Probenflüssigkeit einfangen und an der Grenzfläche fixieren, damit dort die Fluoreszenz angeregt und gemessen werden kann. Hierfür können verschiedene Rezeptor-Ligand-Systeme eingesetzt werden. Zu diesen Systemen zählen unter anderem Antikörper-Antigen, Lectin-Kohlenhydrat, DNA- oder RNA-komplementäre Nukleinsäure, DNA- oder RNA-Protein, Hormonrezeptor, Enzym-Enzymcofaktoren, Protein G- oder Protein A-Immunglobulin oder Avidin-Biotin. Vorzugsweise werden die Fängermoleküle auf die Grenzfläche mittels eines Druckverfahrens, z.B. mittels eines Piezodispensiersystems, aufgedruckt.

In der vorliegenden Erfindung weist die Messkassette einen mit der Messzelle in Fluidkontakt stehenden Probenkanal auf, an dem wenigstens eine der folgenden Einrichtungen a) bis c) vorgesehen ist:
a) eine Zone zum Auflösen eines Tracers,
b) ein Probenmischbereich und/oder
c) ein Flüssigkeitsdetektionsbereich,
wobei der Probenkanal und die daran vorgesehenen Einrichtungen a), b) und/oder c) von einer

Aussparung gebildet werden, die im Korpus, im Boden oder sowohl im Korpus als auch im Boden vorgesehen ist, wobei die Flächen auf denen der Korpus und der Boden um diese Aussparung herum aufeinanderliegen, durch Laserschweißen unmittelbar und fluiddicht miteinander verbunden sind.

Vorzugsweise beträgt die Höhe des Probenkanals nicht mehr als 300 µm. Besonders bevorzugt ist die Höhe des Kanals in dem Bereich von 100 bis 300 µm.

Vorzugsweise sind an dem Probenkanal einer oder mehrere Flüssigkeitsdetektionsbereiche (Fluidiksensor) vorgesehen. Ein solcher Flüssigkeitsdetektionsbereich am Probenkanal dient dazu, unerwünschte Luftblasen im Probenkanal zu erkennen oder um festzustellen, ob sich an einer bestimmten Stelle des Probenkanals Probenflüssigkeit befindet, in dem der Übergang zwischen Luft und Probe im Probenkanal festgestellt wird.

Bei einer bevorzugten Ausführungsform der Erfindung erfolgt die Flüssigkeitsdetektion durch ein optisches Verfahren, bei dem ein Lichtstrahl durch den Probenkanal geleitet wird, um anhand der Brechung des Lichtstrahles festzustellen, ob sich an dieser Stelle im Probenkanal Luft oder Probenflüssigkeit befindet. Insofern ist es zweckmäßig und vorteilhaft, den Probenkanal wenigstens abschnittsweise in ein optisch transparentes Material einzubetten, damit ein Lichtstrahl für Zwecke der Fluiddetektion durch den Probenkanal geleitet werden kann. Vorzugsweise befindet sich der Abschnitt des Probenkanals, in dem eine Flüssigkeitsdetektion durchgeführt werden soll im transparenten Material des Korpus. Ist der Boden bei einer solchen Ausführungsform der Erfindung aus einem für den Lichtstrahl nicht durchlässigen Material, so befinden sich zweckmäßigerweise im Bereich des Strahlengangs des Lichtstrahls zur Detektion von Flüssigkeit im Boden der Messkassette Aussparungen, durch die der Lichtstrahl vor dem Eintritt in den Probenkanal bzw. nach Durchleuchten des Probenkanals ein- bzw. austreten kann.

Der Flüssigkeitsdetektionsbereich kann auch zur Bestimmung des eingesetzten Probenvolumens z.B. über die Parameter Zeit und Pumpengeschwindigkeit oder der Lage der Sensoren zueinander verwendet werden.

In den Fällen, in denen die interessierenden Moleküle (Zielmoleküle) in der Probe nicht selbst zur Fluoreszenzemission angeregt werden können, werden diese mit geeigneten Fluoreszenzmarkierungen (Tracer) markiert. In einer bevorzugten Ausführungsform der vorliegenden Erfindung ist hierfür an dem im Korpus vorgesehenen Probenkanal für Zwecke der Reaktion/Umsetzung mit der Probe in der Messkassette wenigstens eine Zone zum Auflösen eines Tracers und optional wenigstens ein Probenmischbereich vorgesehen. In dieser Zone können auch weitere Reagenzien z.B. Reagenzien zur pH- Wert Einstellung der Probe, Lysepuffer oder Reagenzien zur Reduzierung von unspezifischer Anbindung aufgelöst werden und ebenfalls im Mischbereich mit der Probe vermischt werden.

In einer Ausführungsform der vorliegenden Erfindung ist der Korpus der Messkassette als Einkomponententeil im Spritzgussverfahren hergestellt. Bei einer anderen Ausführungsform ist der Boden als Einkomponententeil im Spritzgussverfahren hergestellt. Bei noch einer weiteren Ausführungsform sind sowohl der Korpus als auch der Boden jeweils als Einkomponententeile im Spritzgussverfahren hergestellt.

Die fluoreszenzmarkierten Tracer werden vorzugsweise mittels eines Druckverfahrens, z.B. mittels eines Piezodispensiersystems, in die für deren Auflösung vorgesehene Zone aufgedruckt.

Der Probenmischbereich ist vorzugsweise ein sogenannter Snake-Mixer, in dem durch die serpentinenartigen Anordnung des Probenkanals eine effiziente Durchmischung der Probe erzielt werden kann.

Wird eine erfindungsgemäße Messkassette in eine geeignete Messvorrichtung eingebracht, kann es leicht zu minimalen Abweichungen von der Idealposition kommen. Auch wenn diese Abweichungen nur minimal sind, kann dies auf die präzisen optischen Messverfahren signifikante Auswirkungen haben. Bei einer bevorzugten Ausführungsform der Erfindung bildet der Korpus daher an der Stelle, an der die Anregungsstrahlung in den Korpus eintritt, eine Sammellinse, mit der der Strahl der Anregungsstrahlung stets zuverlässig auf die gewünschte Stelle der Grenzfläche von flüssiger Probe und Oberfläche des transparenten Materials des Korpus gerichtet wird. Diese in den Korpus integrierte Sammellinse kann die zuvor beschriebenen Einlegevarianzen ausgleichen. Insbesondere werden hierdurch im Vergleich mit aus dem Stand der Technik bekannten Systemen positionierungsbedingte Schwankungen des evaneszenten Feldes (Eindringtiefe, Intensität) signifikant reduziert, indem die Ausrichtung der Anregungsstrahlung durch die Sammellinse immer exakt auf den Bereich, in dem die dort auftretende Fluoreszenzemission gemessen werden soll, d.h. innerhalb der vorbestimmten Bereichsgrenzen, erfolgt.

Vorzugsweise erfolgt die Ausrichtung der Anregungsstrahlung durch die Sammellinse auf den Bereich, in dem die zu messende Fluoreszenzemission erzeugt werden soll, d.h. mittig entlang der Längsachse der Messzelle Vorzugsweise ist die Fläche des Anregungsbereichs kreisrund oder elliptisch. Besonders bevorzugt ist die Fläche des Anregungsbereichs elliptisch mit Abmessungen in dem Bereich von etwa 0,7 x 0,25 mm.

Zum Einfüllen der flüssigen Probe in die Messkassette weist die Messkassette eine Probeneinfüllöffnung auf. Vorzugsweise ist die Probeneinfüllöffnung auf der Oberseite des Korpus der Messkassette vorgesehen. Erfindungsgemäß ist die Probeneinfüllöffnung bis zu einem Druck- bzw. Unterdruck von +/- 100 mbar druckdicht verschließbar. Hierfür sind Druckdichtungen vorgesehen, die besonders bevorzugt aus Polypropylen bestehen. Bei einer besonders bevorzugten Ausführungsform ist der Verschluss zum Verschließen der Probeneinfüllöffnung ein Schieber, der aus einer geöffneten Position, nachdem die Probe eingefüllt wurde, in eine geschlossene Position verschiebbar ist, wobei durch die Geometrie der Schieberführung der Schieber auf eine an der Probeneinfüllöffnung vorgesehen Druckdichtung gepresst wird.

Um in einem Probenkanal einer erfindungsgemäßen Messkassette einen positiven oder negativen Druck erzeugen zu können, wird bei der Erfindung wenigstens eine mit einer Druckquelle verbindbare Drucköffnung vorgesehen, die in ("Druck-")Kontakt mit dem Probenkanal steht. Auf diese Weise kann in dem Probenkanal positiver oder negativer Druck aufgebaut werden, womit die Probe durch den Probenkanal bewegt werden kann. Die Drucköffnungen sind so ausgelegt, dass ein Druck von wenigstens +/- 100 mbar angelegt werden kann. Zweckmäßigerweise ist auch der Probenkanal bei diesen Ausführungsformen so ausgelegt, dass er diesem Druck ohne weiteres standhält.

Bei einer bestimmten Ausführungsform ist in der Messkassette am Ende des Probenkanals ein Probenabfallbereich vorgesehen, in dem bereits analysierte Probenflüssigkeit aufgenommen werden kann. Dies hat den Vorteil, dass die bereits analysierte Probenflüssigkeit nach dem Durchfluss durch die Messzelle die Messkassette nicht verlässt, sondern in der Messkassette verbleibt. Der Probenabfallbereich kann entweder im Korpus oder im Boden der Messkassette vorgesehen sein.

Bei einer Ausführungsform der vorliegenden Erfindung ist an der Messkassette zusätzlich zu dem Korpus und dem Boden eine Abdeckung vorgesehen, die den Korpus wenigstens teilweise abdeckt, wobei wenigstens im Bereich des Strahlengangs der Anregungsstrahlung und der Fluoreszenzemission Aussparungen vorgesehen sind, so dass der Korpus in diesem Bereich nicht von der Abdeckung abgedeckt wird. Die Abdeckung ist mit der Einheit aus Korpus und Boden fest verbunden. Vorzugsweise erfolgt die Verbindung von Abdeckung mit Korpus und Boden durch Heißverstemmen die sich durch Abdeckung, Korpus und Boden erstrecken. Bei den Ausführungsformen mit Abdeckung, die in ihrem Probenkanal einen Flüssigkeitsdetektionsbereich zur optischen Erkennung von Flüssigkeit aufweisen, ist in dem Bereich des Strahlengangs eines Lichtstrahls zur Detektion von Flüssigkeit eine Aussparung in der Abdeckung vorgesehen, so dass die optische Detektion von Flüssigkeit trotz Abdeckung möglich ist.

Für jede Messkassettencharge ist es erforderlich, chargenspezifische Kalibrationsdaten mitzuliefern. Dies erfolgt bei bekannten Systemen durch ein Speichermedien, wie z.B. einen Barcode oder einen Speicherchip (EEPROM). Idealerweise soll sich solch ein Medium auf jeder Messkassette befinden, so dass alle Informationen zur Identifizierung einer Messkassette und insbesondere die zugehörenden Chargenkalibrationsdaten im Produktionsprozess direkt auf diese aufgebracht werden und beim Vermessen einer solchen Messkassette vom Messgerät erfasst und verifiziert werden können. Grundsätzlich können die Chargenkalibrationsdaten jedoch immer erst nach dem vollständigen Abschluss der Fertigung einer Charge (d.h. inklusive Verpackung) ermittelt werden. Der Zeitraum zwischen der Produktion der ersten Teile einer Charge und dem Bestimmen besagter Kalibrationsdaten kann mehrere Stunden bis Tage betragen. Dies erfordert zur Aufrechterhaltung der Reagenzienstabilität in solch einer Messkassette, dass diese luft- und lichtdicht verpackt wird. Um besagtes Medium mit den Kalibrationsdaten auf die Messkassette aufzubringen, ist somit ein zusätzlicher, kosten- und zeitintensiver Ent- und Verpackungsschritt erforderlich, während dessen es zusätzlich zur Schädigung der Messkassette kommen kann. Bei vielen bekannten Systemen wird versucht, diesen Schritt zu vermeiden, indem eines dieser Medien separat einer Verpackungseinheit beigelegt wird. Der Anwender muss dann vor der ersten Verwendung entweder einen Speicherchip mit den besagten Informationen einlegen oder einen Barcode ins Gerät eingelesen.

Um dieses umständliche und nicht unbedingt fehlerfreie Verfahren zu umgehen ist eine bevorzugte Ausführungsform der erfindungsgemäßen Messkassette mit einem elektronischen Speicherchip versehen, der auch nach dem Verpacken der Messkassette durch die Verpackung beschreibbar und überschreibbar ist. Vorzugsweise handelt es sich bei diesem elektronischen Speicherchip um ein RFID-Etikett. Das RFID-Etikett kann entweder mit oder ohne zusätzlich visuell lesbare Informationen vorgesehen werden.

Der elektronische Speicherchip kann fortlaufend während des Fertigungsprozesses einer Charge auf jede Messkassette aufgebracht werden. Jede Messkassette erhält damit eine individuelle, elektronische Nummer. Jede Messkassette kann unmittelbar nach deren Montage in die gewünschte Verpackung, beispielsweise eine geeignete Primärverpackung verpackt und unter den erforderlichen Lagerbedingungen gelagert werden. Das Aufbringen der nachträglich ermittelten chargenspezifischen Informationen, z.B. der Kalibrationsdaten kann dann jederzeit, auch z.B. in einer gekühlten Umgebung, kontaktfrei durch die Verpackung hindurch erfolgen. Ein weiterer Vorteil dieses Verfahrens ist es, dass im Rahmen der regelmäßigen Produktüberwachung über den Lebenszyklus einer Charge eine erforderliche Nachkalibrierung auch nach mehreren Monaten ohne Beeinträchtigung der Produktintegrität durchgeführt werden kann.

Gemäß einem weiteren Aspekt der vorliegenden Offenbarung wird ein Verfahren zum Herstellen einer Messkassette der oben beschriebenen Art bereitgestellt, wobei bei diesem Verfahren der Korpus und der Boden als Einkomponententeile im Spritzgussverfahren hergestellt werden. Es handelt sich damit sowohl beim Korpus als auch beim Boden um jeweils ein einstückiges Bauteil, das aus je einem Material hergestellt ist. Bei den Messkassettenausführungsformen, die zusätzlich zu Korpus und Boden auch eine Abdeckung aufweisen, ist auch die Abdeckung vorzugsweise als Einkomponententeil im Spritzgussverfahren hergestellt. Bei den Ausführungsformen, bei denen die Messkassette zum Verschließen der Probeneinfüllöffnung einen Verschluss aufweist, ist dieser Verschluss vorzugsweise integraler Bestandteil des Einkomponententeils, an dem der Verschluss vorgesehen ist.

Bei einem bevorzugten Verfahren wird bei der Herstellung einer Messkassette mit Abdeckung die Verbindung der Abdeckung mit der Einheit aus Korpus und Boden durch Heißverstemmen vorgenommen. Hierfür weist die Abdeckung entsprechende Kunststoffstifte auf, welche durch Bohrungen an den entsprechenden Stellen in Korpus und Boden geführt werden und bodenseitig durch thermische Verformung eine formschlüssige Verbindung der Abdeckung mit dem Korpus herstellen.

Ein weiterer Aspekt der vorliegenden Erfindung betrifft eine Messvorrichtung für die Detektion von Zielmolekülen in einer flüssigen Probe durch Messung von Fluoreszenzemission nach Anregung im evaneszenten Feld, wobei die Messvorrichtung einen Einschubschacht für eine entsprechende Messkassette aufweist. In dem Einschubschacht der Messvorrichtung wird die Messkassette zumindest in einer Position so angeordnet, dass die in der Messvorrichtung angeordnete Lichtquelle für die Anregungsstrahlung eine Anregungsstrahlung bereitstellen kann, die so auf die Grenzfläche von flüssiger Probe und Messzelle auftrifft, dass Totalreflexion der Anregungsstrahlung unter Ausbildung eines evaneszenten Feldes in der flüssigen Probe erfolgt. Über die Wahl des Winkels des einfallenden Anregungsstrahls können die Eindringtiefe sowie die Intensität des evaneszenten Feldes beeinflusst werden. Vorzugsweise beträgt der Winkel, mit der die Anregungsstrahlung auf die Grenzfläche auftrifft etwa 8 Grad.

Insbesondere wird eine Messvorrichtung der vorgenannten Art offenbart, die einen Einschubschacht für eine Messkassette gemäß der vorliegenden Erfindung aufweist. Es wird unter anderem auch dass vollständige System aus einer Messvorrichtung der vorgenannten Art und einer oder mehrerer Messkassetten gemäß der vorliegenden Erfindung offenbart. Insbesondere wird eine Messvorrichtung der vorgenannten Art mit in den Einschubschacht eingeschobener Messkassette gemäß der vorliegenden Erfindung offenbart. Bei einer bevorzugten Ausführungsform der erfindungsgemäßen Messvorrichtung umfasst diese auch Einrichtungen, mit denen eine Relativbewegung der Messkassette gegenüber der Lichtquelle für die Anregungsstrahlung ausgeführt werden kann, um so verschiedene Messzellbereiche in den Strahlengang der Anregungsstrahlung zu bringen. Auf diese Weise können in der Messzelle mehrere verschiedene Fängerzonen vorgesehen sein, um mehrere verschiedene Analyten an den unterschiedlichen Fängerzonen unter Verwendung nur einer Lichtquelle anzusprechen.

Bei einer Alternative der oben genannten Ausführungsform wird die Messzelle im Einschubschacht wahlweise kontinuierlich oder stufenweise entlang einer Bewegungsachse von einer ersten Position in wenigstens eine zweite Position bewegt, um so verschiedene Messzellbereiche in den Strahlengang der Anregungsstrahlung zu bringen. Alternativ hierzu kann die erfindungsgemäße Messvorrichtung auch so gestaltet sein, dass die Lichtquelle für die Anregungsstrahlung kontinuierlich oder stufenweise entlang einer Bewegungsachse so bewegt werden kann, dass sie ihren Anregungsstrahl auf verschiedene Bereiche der Messzelle ausrichtet.

Unabhängig von der gewählten Alternative ist die Lichtquelle für die Anregungsstrahlung in der Messvorrichtung vorzugsweise so vorgesehen, dass der Strahl der Anregungsstrahlung in einem Winkel von 90 Grad zur Bewegungsrichtung der Relativbewegung der Messkassette gegenüber der Lichtquelle auf die Messzelle auftrifft. Auf diese Weise wird unter anderem der Weg des Anregungsstrahls durch den Korpus minimiert. Des weiteren wird stets nur ein kleiner Ausschnitt des optisch transparenten Materials beleuchtet. Zudem ist der Weg des Anregungsstrahls durch den Korpus über den gesamten von dem Anregungsstrahl angesteuerten Bereich immer gleich. Im Übrigen wird insgesamt eine bessere Ortsauflösung des Anregungslichtes innerhalb der Messzelle erreicht. Dieser Vorteil der erfindungsgemäßen Messvorrichtung führt dazu, dass ein besseres Signal-Rausch-Verhältnis erzielt wird. Die erfindungsgemäße Messvorrichtung zeichnet sich dadurch aus, dass sie eine Druckquelle aufweist, die bei in den Einschubschacht eingeschobener Messkassette mit Drucköffnung am Probenkanal so an die Drucköffnungen des Probenkanals angeschlossen ist, dass mittels von der Druckquelle erzeugtem positivem oder negativem Druck eine im Probenkanal befindliche Probe durch den Probenkanal bewegt werden kann. Erfindungsgemäß sind die Druckquelle und die Verbindungen der Druckquelle mit den Drucköffnungen so ausgelegt, dass ein Druck von mindestens +/- 100 mbar angelegt werden kann.

In einem weiteren Aspekt der vorliegenden Erfindung wird ein Verfahren zum Detektieren von Zielmolekülen in einer flüssigen Probe durch Messung von Fluoreszenzemission nach Anregung im evaneszenten Feld beschrieben, wobei man bei dem Verfahren eine erfindungsgemäße Messkassette in Verbindung mit einer erfindungsgemäßen Messvorrichtung einsetzt. In Betracht kommen hier alle Verfahren der vorgenannten Art, bei denen wässrige Proben entsprechend analysiert werden, beispielsweise auch entsprechende Verfahren in der Umwelt- und Lebensmittelanalytik. Vorzugsweise handelt es sich bei dem erfindungsgemäßen Verfahren um Immunoassays oder DNA-Bindungsassays. Die vorliegende Erfindung ist jedoch keinesfalls hierauf beschränkt sondern umfasst sämtliche in diesem Zusammenhang realisierbare Verfahren, bei denen Zielmoleküle in einer flüssigen Probe durch Messung von Fluoreszenzemission nach Anregung im evaneszenten Feld qualitativ und/oder quantitativ erfasst werden.

Bei einer Ausführungsform des erfindungsgemäßen Verfahrens handelt es sich bei der Probe, mit der die Messung durchgeführt wird, um eine aufbereitete oder nicht aufbereitete wässrige Probe für die Lebensmittel- oder Umweltanalytik. Unter einer aufbereiteten Probe ist im Zusammenhang mit der vorliegenden Erfindung eine aus einer Probenquelle entnommene Probe zu verstehen, die für Zwecke der Durchführung der Messung mit dem Fachmann bekannten Maßnahmen aufbereitet wurde, um die Durchführung der Messung zu erleichtern bzw. zu verbessern. Eine Möglichkeit der Aufbereitung einer Probe ist beispielsweise das vorherige Entfernen von die Messung möglicherweise störenden Komponenten aus der Probe.

Bei einer alternativen Ausführungsform des erfindungsgemäßen Verfahrens handelt es sich bei der Probe, mit der die Messung durchgeführt wird, um eine aufbereitete oder nicht aufbereitete Körperflüssigkeit. Hierbei kann die Körperflüssigkeit beispielsweise ausgewählt sein unter Blut, Urin, Speichel usw. Aufbereitete Körperflüssigkeiten können beispielsweise Blutplasma und Serum sein. Bei den Ausführungsformen des erfindungsgemäßen Verfahrens bei denen es sich bei der Probe um Vollblut handelt, macht man sich den Umstand zu Nutze, dass bei einer laminaren Strömung in der Messzelle eine Zentralisierung der Blutkörperchen stattfindet, so dass die Evaneszentfeldanregung in einem Bereich des Vollbluts erfolgen kann, in dem keine Beeinträchtigung der Anregung bzw. Strahlungsemission durch Blutkörperchen erfolgt.

Von den anhängenden Figuren zeigen im Einzelnen:
- Figur 1:: Draufsicht auf eine Ausführungsform einer erfindungsgemäßen Messkassette, bestehend aus einem transparenten Korpus und einem Boden,
- Figur 2:: Draufsicht von unten auf die dem Boden zugewandte Seite des Korpus einer Ausführungsform einer erfindungsgemäßen Messkassette (ohne Darstellung des darauf aufliegenden Bodens),
- Figur 3:: Draufsicht von oben auf die dem Korpus zugewandte Seite des Bodens einer Ausführungsform einer erfindungsgemäßen Messkassette (ohne Darstellung des darauf aufliegenden Korpus),
- Figur 4:: Prinzipdarstellung eines Fluidiksensors in einer Ausführungsform einer erfindungsgemäßen Messkassette bei mit Luft gefülltem Probenkanal (a) und bei mit Probenflüssigkeit gefülltem Probenkanal (b),
- Figur 5:: schematisches Schnittbild durch den Bereich einer Ausführungsform einer erfindungsgemäßen Messkassette, in dem die Messzelle angeordnet ist,
- Figur 6:: schematisches Schnittbild durch den Bereich einer alternativen Ausführungsform einer erfindungsgemäßen Messkassette, in dem die Messzelle angeordnet ist, wobei in dem Bereich eine Sammellinse für die Anregungsstrahlung vorgesehen ist, und
- Figur 7:: schematische Darstellung einer Ausführungsform einer erfindungsgemäßen Messvorrichtung.

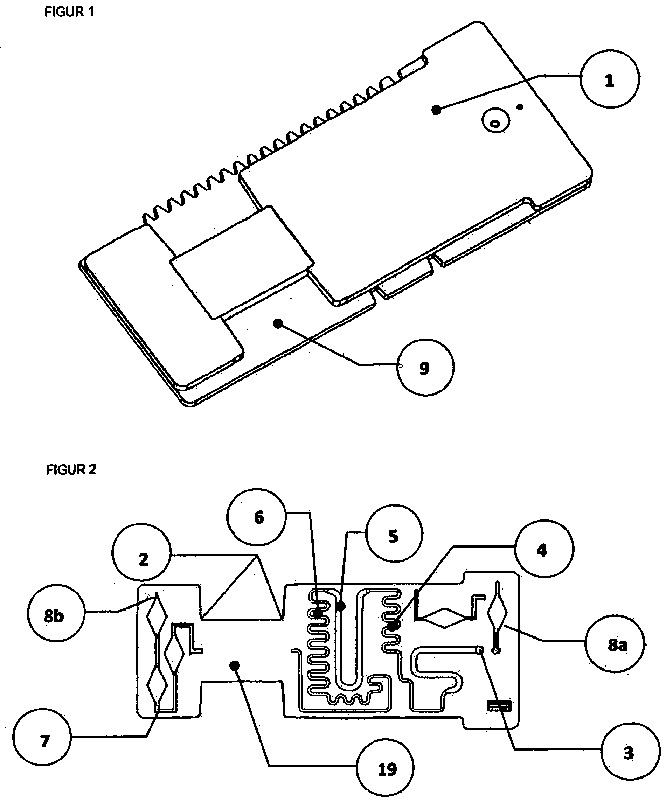

Figur 1 zeigt eine Draufsicht auf eine erfindungsgemäße Messkassette, bestehend aus einem transparenten Korpus (1) und einem Boden (9), welche durch Laserschweißverfahren miteinander verbunden sind. Korpus (1) und Boden (9) sind im Spritzgussverfahren als Einkomponententeile hergestellt.

In Figur 2 ist eine Draufsicht von unten auf die dem Boden zugewandte Seite des Korpus einer erfindungsgemäßen Messkassette dargestellt (ohne Darstellung des auf dieser Seite auf dem Korpus aufliegenden Bodens). Das Korpusteil umfasst eine Probeneinfüllöffnung (3) zur Befüllung mit Probe, eine sich direkt und ohne Verzweigungen anschließende Mikrokanalstruktur (Probenkanal) mit einem Mischbereich (4), einer Zone zum Auflösen der Tracer (5) und einem weiteren Mischbereich (6), einem optischen Bereich (2) sowie einen sich anschließenden Probenabfallbereich (7). Die Kanalenden (8a) und (8b) sind so ausgelegt, dass diese in Verbindung mit dem Boden (9) an die dort vorhandenen Druckanschlussöffnungen (11a) und (11b) angeschlossen sind.

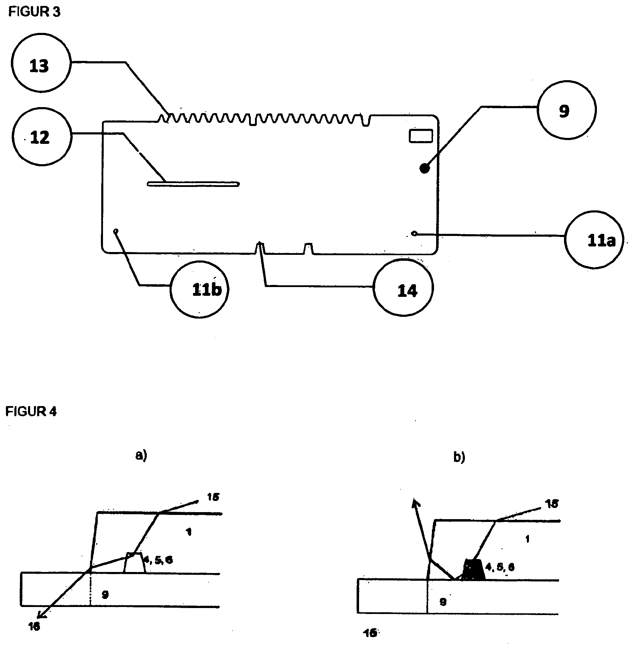

In der Draufsicht von oben auf die dem Korpus zugewandte Seite des Bodens einer erfindungsgemäßen Messkassette von Figur 3 (ohne Darstellung des aufliegenden Korpus) sind die bei der Beschreibung von Figur 2 erwähnten im Boden (9) vorhandenen Druckanschlussöffnungen (11a) und (11b) zu erkennen.

Die entsprechende Messvorrichtung ist dabei so ausgelegt, dass die Messkassette mit Hilfe einer Zahnstruktur (13) vollautomatisch eingezogen und nach Abschluss eines Messvorgangs wieder vollautomatisch ausgegeben wird. Außerdem ist der Einzug so ausgelegt, dass Anwenderfehler bei der Einlage der Messkassette in die entsprechende Messvorrichtung ausgeschlossen werden.

Die in den Figuren 2 und 3 dargestellte Ausführungsform der erfindungsgemäßen Messkassette ist so gestaltet, dass die eingefüllte Probe mit positivem bzw. negativem Druck zwischen Probe und Druckanschlussöffnungen (11a) oder (11b) aus der Probeneinfüllöffnung (3) durch die Mikrofluidkanäle (4-6) sowie durch die Messzelle (12) bewegt werden kann. Zur Erzeugung des benötigten Druckes besitzt die Ausführungsform der erfindungsgemäßen Messvorrichtung, in die die Messkassette zur Durchführung der Analyse eingebracht wird, zweckmäßigerweise eine Druckquelle, wie z.B. eine Spritze, sowie Anschlussmöglichkeiten an die Druckanschlussöffnung (11a) oder (11b) der Messkassette, wobei die Verbindung zwischen Druckquelle und Druckanschlussöffnungen vorzugsweise so ausgelegt ist, dass ein Druck von mindestens ± 100 mbar verwendet werden kann. Bei der Verwendung von positivem/negativem Druck über Port 11a muss der Probeneinlass verschlossen sein. Bei der Verwendung von Port 11 b ist der Verschluss des Probeneinlasses dagegen nicht nötig.

Die Mikrokanäle (4-6) im Korpusteil (1) sind bei der hier dargestellten Ausführungsform dadurch gekennzeichnet, dass es keine Abzweige gibt, an denen Luftblasen eingeschlossen werden können, und der maximale Querschnittsunterschied zwischen kleinstem und größtem Kanalquerschnitt Faktor 2 beträgt, damit es nicht zur Membranbildung und damit zu einer Störung der Fluidik kommen kann.

In den Mikrokanalbereich (5) zwischen den Mischbereichen (4, 6) werden bei Herstellung der Messkassette mittels eines Druckverfahrens, z.B. eines Piezodispensiersystems, fluoreszenzmarkierte Tracer gedruckt. Mittels des gleichen Verfahrens werden auf die Grenzfläche (19) des optischen Elements (2) innerhalb des Bereiches der Messzelle (12) Fängermoleküle (21) gedruckt.

Figur 4 veranschaulicht das Prinzip eines Fluidiksensors für die Fluiddetektion bei einer Ausführungsform der erfindungsgemäßen Messkassette. Die Fluiddetektion erfolgt dabei durch Einkopplung von Licht (15), z.B. mittels einer LED, wobei an der Brechung des eingekoppelten Lichtstrahls zu erkennen ist, ob sich Probenflüssigkeit in diesem Kanalbereich befindet oder nicht. Bei leerem Kanal ist der Brechungsindexunterschied zwischen Korpus und Luft bei dieser Ausführungsform so gewählt, dass der einfallende Strahl nur soweit gebrochen wird, dass er einen gegenüberliegenden Detektor (16), z.B. eine Photodiode, trifft, während der Brechungsindexunterschied bei gefülltem Kanal dazu führt, dass der eintreffende Strahl so gebrochen wird, dass er an der Korpus-Boden-Grenzfläche reflektiert wird und den gegenüberliegenden Detektor (16) nicht erreicht. Damit im Falle eines leeren Kanals der Lichtstrahl den besagten Detektor erreichen kann, sind im Boden (9) an den entsprechenden Stellen Aussparungen (14) vorgesehen.

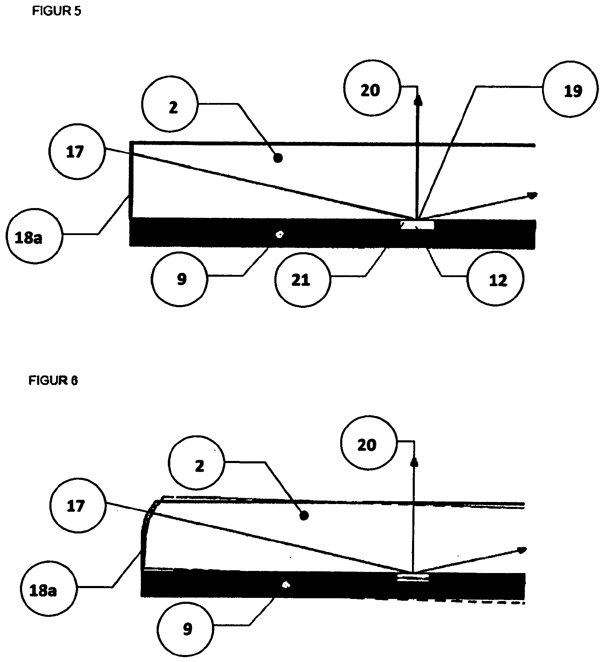

In Figur 5 ist ein schematisches Schnittbild durch den Bereich einer Ausführungsform einer erfindungsgemäßen Messkassette, in dem die Messzelle angeordnet ist, dargestellt.

Die Messzelle (12) kann über eine Mikrokanalstruktur, wie Sie beispielsweise in den Figuren 2 und 3 dargestellt ist, mit der zu analysierenden Probe befüllt werden. Die Messzelle (12) weist einen optisch transparenten Bereich (2) auf, der Bestandteil des auf dem Boden (9) aufliegenden Korpus (1) ist. Dieser optisch transparente Bereich (2) weist eine Lichteintrittsfläche (18) sowie eine Grenzfläche der Totalreflektion (19) auf. Das Material des optisch transparenten Bereichs (2) weist zweckmäßigerweise einen größeren Brechungsindex als die zu vermessenden Proben auf.

Wird von einer Lichtquelle (17) in einer Messvorrichtung, in der die Messkassette von Figur 5 angeordnet ist, Licht (bevorzugt monochromatisches Licht) zu einem Strahl mit einer bestimmten Geometrie (bevorzugt elliptisch oder kreisrund) über die Lichteintrittsfläche (18a) in den optisch transparenten Bereich (2) in einem geeigneten Winkel einkoppelt, so wird der an der Grenzfläche (19) auftreffende Lichtstrahl totalreflektiert.

Durch die an der Grenzfläche (19) erzeugte Totalreflexion entsteht auf deren Rückseite ein evaneszentes Feld. Über die Wahl des Winkels des einfallenden Lichtstrahls können die Eindringtiefe sowie die Intensität besagten evaneszenten Feldes beeinflusst werden.

Bei der hier dargestellten Ausführungsform ist im Bodenteil (9) eine Aussparung vorgesehen, die in Verbindung mit der Grenzfläche (19) die Messzelle (12) ausbildet, durch die die Probe, beispielsweise vom Mischbereich (6) kommend mittels positivem oder negativem Druck vorzugsweise mit konstanter, homogener Flussrate bewegt wird. Diese Messzelle (12) ist hier durch eine besonders geringe Höhe im Vergleich zu den übrigen Kanälen einer ggf. vorgeschalteten und/oder nachgeschalteten Mikrofluidik-Struktur gekennzeichnet. Dadurch wird das Probenvolumen optimal ausgenutzt, da bei einer möglichst hohen Fließgeschwindigkeit eine möglichst lange Messzeit ermöglicht wird. Eine bevorzugte Höhe der Messzelle (12) ist ≤ 300 µm.

An der Grenzfläche (19) ist in der Messzelle (12) wenigstens eine Fängerzone (21) vorgesehen, in der Fängermoleküle angeordnet sind, die die interessierenden Moleküle aus der Probenflüssigkeit einfangen und an der Grenzfläche fixieren, damit dort die Fluoreszenz angeregt und gemessen werden kann.

Für die Messung der Fluoreszenz ist in einer Messvorrichtung, in der die Messkassette von Figur 5 angeordnet ist, ein Detektor (20) zur Messung einer sich zeitlich ändernden Fluoreszenzintensität (z.B. PMT oder CCD-Kamera) vorgesehen.

Bei der Ausführungsform von Figur 5 ist die Lichteintrittsfläche eine Ebene (18a). Bei der alternativen Ausführungsform einer erfindungsgemäßen Messkassette, die in Figur 6 dargestellt ist, ist für die Anregungsstrahlung die Lichteintrittsfläche als eine Sammellinse (18b) ausgeführt.. Durch die Sammellinse (18b) wird sichergestellt, dass der Lichtstrahl von der Lichtquelle (17) bei dieser Ausführungsform immer mittig auf die Grenzfläche (19) innerhalb des Bereiches der Messzelle (12) auftrifft und damit die Auswirkungen von Einlagevarianzen auf ein sich unter Totalreflexion bildendes evaneszentes Feld ausgeglichen werden. Dieses Ausgleichen reduziert gegenüber bekannten Systemen positionierungsbedingte Schwankungen des evaneszenten Feldes, d.h. dessen Eindringtiefe bzw. Intensität.

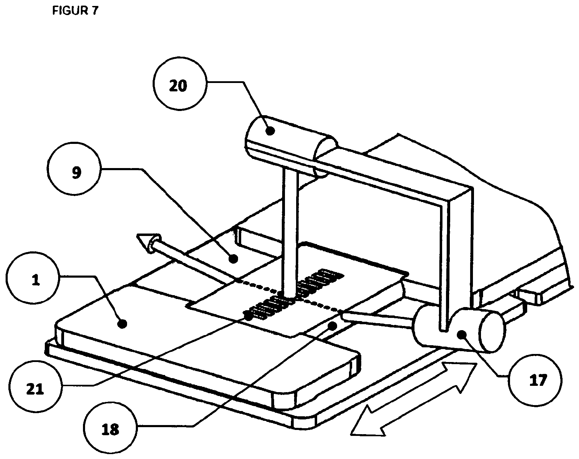

Figur 7 ist eine schematische Darstellung einer Ausführungsform einer erfindungsgemäßen Messvorrichtung. Dargestellt ist u.a. der Strahlengang des Anregungslichts aus der Lichtquelle (17) und des Fluoreszenzlichts von der Messzelle zum Detektor (20).

Die Lichtquelle (17) und der Detektor ((20) sind hier mechanisch im Messgerät in einer Ebene zu einer Einheit miteinander verbunden. Diese Einheit und die zu vermessende Messkassette aus Korpus (1) und Boden (9) werden relativ zueinander bewegt. Die Lichtquelle (17) ist dabei quer zur Bewegungsrichtung angeordnet, so dass der Lichtstrahl quer zur Bewegungsrichtung auf die Grenzfläche (19) strahlt. Mit dieser Auslegung konnten wesentliche Nachteile bekannter System vermieden werden, da (i) der Weg besagten Lichtstrahls durch den optisch transparenten Bereich (2) minimiert wird, (ii) immer nur ein kleiner Ausschnitt des optisch transparenten Bereichs (2) beleuchtet wird, (iii) der Weg des Anregungslichtes durch besagtes optisch transparenten Bereich (2) über den gesamten Detektionsbereich immer gleich lang ist und (iv) eine bessere Ortsauflösung erreicht wird.

Die Dicke des optisch transparenten Bereichs (2) ist hierbei unabhängig von der Anzahl der Fängerzonen (21) zu wählen. Damit kann eine Vielzahl von Analyten an den unterschiedlichen Fängerzonen (21) unter Verwendung nur einer Lichtquelle (17) und nur eines Fluoreszenzfarbstoffes für alle Analyten mit einer Messung bestimmt werden, gleiche Bedingungen für Anregung und Detektion über den gesamten Scanbereich geschaffen sowie die Auswirkung der den Kunststoffen eigenen Autofluoreszenz signifikant reduziert und damit das Signal-Rausch-Verhältnis deutlich verbessert werden.

### Bezugszeichenliste:

- 1: Korpus
- 2: optischer Bereich
- 3: Probeneinfüllöffnung
- 4: Mischbereich
- 5: Zone zum Auflösen der Tracer
- 6: zweiter Mischbereich
- 7: Probenabfallbereich
- 8: Kanalende
- 9: Boden

- 11: Druckanschlussöffnung
- 12: Messzelle
- 13: Zahnstruktur
- 14: Aussparungen
- 15: Einkopplung von Licht
- 16: Detektor
- 17: Lichtquelle
- 18: Lichteintrittsfläche
- 19: Grenzfläche

- 20: Fluoreszenzdetektor
- 21: Fängerzone

## Patentansprüche

1. Messsystem für die Detektion von Zielmolekülen in einer flüssigen Probe durch Messung von Fluoreszenzemission nach Anregung im evaneszenten Feld, wobei das Messsystem eine Messvorrichtung und mehrere austauschbare Einweg-Messkassetten mit einer Durchfluss-Messzelle (12) umfasst,
wobei die Messvorrichtung einen Einschubschacht aufweist, in dem eine der austauschbaren Einweg-Messkassetten zumindest in einer Position so angeordnet wird, dass eine in der Messvorrichtung angeordnete Lichtquelle (17) eine Anregungsstrahlung bereitstellen kann, die so auf die Grenzfläche (19) von flüssiger Probe und Messzelle (12) auftrifft, dass Totalreflexion der Anregungsstrahlung unter Ausbildung eines evaneszenten Feldes in der flüssigen Probe erfolgt,
wobei die Einweg-Messkassetten einen Korpus (1) aus einem optisch transparenten Material und einen an der Unterseite des Korpus (1) anliegenden Boden (9) umfassen, und wobei die Einweg-Messkassetten außer der Durchfluss-Messzelle (12) noch eine Probeneinfüllöffnung (3), einen Probenkanal und Druckanschlussöffnungen (11) aufweisen, wobei der Probenkanal mit der Messzelle (12) in Fluidkontakt steht und wenigstens eine der folgenden Einrichtungen aufweist: a) eine Zone zum Auflösen eines Tracers (5), b) ein Probenmischbereich (4) und/oder c) ein Flüssigkeitsdetektionsbereich, und wobei die Messzelle (12) und der Probenkanal und die Einrichtungen a), b) und/oder c) von einer Aussparung gebildet werden, die im Korpus (1), im Boden (9) oder sowohl im Korpus (1) als auch im Boden (9) vorgesehen ist, und wobei sowohl der Korpus (1) als auch der Boden (9) der Einweg-Messkassetten jeweils ein einstückiges Bauteil sind, das aus je einem Material hergestellt ist, die Flächen auf denen der Korpus (1) und der Boden (9) um die Aussparung herum aufeinanderliegen, durch Laserschweißen unmittelbar und fluiddicht miteinander verbunden sind, Druckdichtungen vorgesehen sind, mit denen die Probeneinfüllöffnung (3) bis zu einem Druck- bzw. Unterdruck von +/- 100 mbar druckdicht verschließbar ist und die Messvorrichtung eine Druckquelle aufweist, die bei der in den Einschubschacht eingeschobenen Messkassette an die Druckanschlussöffnungen (11) des Probenkanals angeschlossen ist und mittels positivem oder negativem Druck von wenigstens +/- 100 mbar die Probe durch den Probenkanal bewegen kann, wobei die Lichtquelle (17) für die Anregungsstrahlung und der Fluoreszenzdetektor (20) in dem Messsystem so angeordnet sind, so dass sowohl die Fluoreszenzanregung als auch die Fluoreszenzmessung durch das optisch transparente Material des Korpus (1) von oben erfolgt.

2. Messsystem nach Anspruch 1, **dadurch gekennzeichnet, dass** die Messkassette als Verschluss zum Verschließen der Probeneinfüllöffnung (3) einen Schieber aufweist, der aus einer geöffneten Position in eine geschlossene Position verschiebbar ist, wobei durch die Geometrie der Schieberführung der Schieber auf eine an der Probeneinfüllöffnung (3) vorgesehen Druckdichtung gepresst wird.

3. Messsystem nach einem der Ansprüche 1 oder 2, **dadurch gekennzeichnet, dass** in der Messzelle (12) mehrere verschiedene Fängerzonen (21) vorgesehen sind, um mehrere verschiedene Analyten an den unterschiedlichen Fängerzonen (21) unter Verwendung nur einer Lichtquelle (17) ansprechen zu können.

4. Messsystem nach einem der Ansprüche 1 bis 3, **dadurch gekennzeichnet, dass** die Messvorrichtung Einrichtungen umfasst, mit denen eine Relativbewegung der Messkassette gegenüber der Lichtquelle (17) für die Anregungsstrahlung ausgeführt werden kann, um so verschiedene Messzellbereiche in den Strahlengang der Anregungsstrahlung zu bringen.

5. Messsystem nach Anspruch 4, **dadurch gekennzeichnet, dass** die Lichtquelle (17) für die Anregungsstrahlung in der Messvorrichtung so vorgesehen ist, dass der Strahl der Anregungsstrahlung in einem Winkel von 90 Grad zur Bewegungsrichtung der Relativbewegung der Messkassette gegenüber der Lichtquelle (17) auf die Messzelle (12) auftrifft.

6. Messsystem nach einem der Ansprüche 1 bis 5, **dadurch gekennzeichnet, dass** an der Stelle, an der die Anregungstrahlung in den Korpus (1) eintritt (18), eine Sammellinse (18b) aufweist, mit der der Strahl der Anregungstrahlung mittig entlang der Längsachse der Messzelle (12) immer exakt auf die gewünschte Stelle der Grenzfläche (19) von flüssiger Probe und Oberfläche des transparenten Materials des Korpus (1) gerichtet wird, an der die zu messende Fluoreszenzemission erzeugt werden soll.

7. Messsystem nach einem der Ansprüche 1 bis 6, **dadurch gekennzeichnet, dass** an einem Ende des Probenkanals (8) im Korpus (1) oder im Boden (9) ein Probenabfallbereich (7) vorgesehen ist.

8. Messsystem nach einem der Ansprüche 1 bis 7, **dadurch gekennzeichnet, dass** bei der Messkassette zusätzlich zum Korpus (1) und dem Boden (9) eine Abdeckung vorgesehen ist, die den Korpus (1) wenigstens teilweise abdeckt, wobei wenigstens im Bereich des Strahlengangs der Anregungsstrahlung und der Fluoreszenzemission Aussparungen vorgesehen sind, wodurch der Korpus (1) in diesem Bereich nicht von der Abdeckung abgedeckt wird.

9. Messsystem nach Anspruch 8, bei dem die Verbindung der Abdeckung der Messkassette mit der Einheit aus Korpus (1) und Boden (9) durch Heißverstemmen ausgebildet worden ist.

10. Messsystem nach einem der Ansprüche 1 bis 9, **dadurch gekennzeichnet, dass** die Messkassette mit einem elektronischen Speicherchip versehen ist, der auch nach dem Verpacken der Messkassette durch die Verpackung beschreibbar und überschreibbar ist.

11. Messsystem nach einem der Ansprüche 1 bis 10, **dadurch gekennzeichnet, dass** die Messkassette mit Hilfe einer Zahnstruktur (13) vollautomatisch eingezogen und nach Abschluss eines Messvorgangs wieder vollautomatisch ausgegeben wird.

12. Verfahren zum Detektieren von Zielmolekülen in einer flüssigen Probe durch Messung von Fluoreszenzemission nach Anregung im evaneszenten Feld, bei dem man das Messsystem nach einem der Ansprüche 1 bis 11 einsetzt.

13. Verfahren nach Anspruch 12, **dadurch gekennzeichnet, dass** die Probe eine Körperflüssigkeit oder eine wässrige Probe für die Lebensmittel- oder Umweltanalytik ist.

## Claims

1. Measuring system for detecting target molecules in a liquid sample by measurement of fluorescence emission after excitation in an evanescent field, wherein the measuring system comprises a measuring device and a plurality of replaceable disposable measuring cassettes having a flow-through measuring cell (12),
wherein the measuring device has an insertion shaft, in which one of the replaceable disposable measuring cassettes is arranged in at least one position in such a way that a light source (17) which is arranged in the measuring device may offer an excitation radiation, which impinges onto the boundary surface (19) of liquid sample and measuring cell (12) such that total reflection of the excitation radiation takes place by forming an evanescent field in the liquid sample,
wherein the disposable measuring cassettes comprise a body (1) of an optically transparent material and a base (9) lying adjacent to the under-side of the body (1), and wherein the disposable measuring cassettes, besides the flow-through measuring cell (12), comprise a sample filling opening (3), a sample channel and pressure openings (11), wherein the sample channel is in fluid contact with the measuring cell (12) and comprises at least one of the following features: a) a zone for dissolving a tracer (5), b) a sample mixing region (4) and/or c) a liquid detection region, and wherein the measuring cell (12) and the sample channel and the features a), b) and/or c) are formed by a recess which is provided in the body (1), in the base (9) or both in the body (1) and in the base (9) and wherein both the body (1) and the base (9) of the disposable cassettes each are a one-component part, which each are produced from one material, the areas on which the body (1) and the base (9) lie on one another around this recess are bonded to one another directly and in a fluid-tight manner by laser welding, pressure seals are provided, with which the sample filling opening (3) can be sealed in a pressure-tight manner up to a pressure or negative pressure, respectively, of +/- 100 mbar and the measuring device comprises a pressure source, which is connected to the pressure openings (11) of the sample channel when the measuring cassette is inserted into the insertion shaft and which can move the sample through the sample channel by means of positive or negative pressure of at least +/- 100 mbar, wherein the light source (17) for the excitation radiation and the fluorescence detector (20) are arranged in the measuring system in such a way that the fluorescence excitation as well as the fluorescence measurement occur through the optically transparent material of the body (1) from above.

2. Measuring system according to claim 1, **characterized in that** the measuring cassette comprises a slide valve as a seal for sealing the sample filling opening (3), which can be moved from an open position to a closed position, wherein due to the geometry of the slide valve guide the slide valve is pressed onto a pressure seal provided at the sample filling opening (3).

3. Measuring system according to one of claims 1 or 2, **characterized in that** a plurality of trapping zones (21) are provided in the measuring cell (12) in order to be able to act on a plurality of different analytes at different trapping zones (21) using only one light source (17).

4. Measuring system according to one of claims 1 to 3, **characterized in that** the measuring device comprises arrangements for providing a relative movement of the measuring cassette with respect to the light source (17) for the excitation radiation, in order to bring various regions of the measuring cell into the beam path of the excitation radiation.

5. Measuring system according to claim 4, **characterized in that** the light source (17) is provided for the excitation radiation in the measuring device such that the beam of the excitation radiation meets the measuring cell (12) at an angle of 90 degrees to the direction of the relative movement of the measuring cassette with respect to the light source (17).

6. Measuring system according to one of claims 1 to 5, **characterized in that** at the point (18) where the excitation radiation enters into the body (1), the body forms a converging lens (18b) which directs the beam of the excitation radiation centrally along the longitudinal axis exactly to the desired point of the boundary surface (19) of the liquid sample and the surface of the transparent material of the body (1) at which the fluorescence emission to be measured shall be generated.

7. Measuring system according to one of claims 1 to 6, **characterized in that** a sample waste region (7) is provided in the body (1) or in the base (9) at one end of the sample channel (8).

8. Measuring system according to one of claims 1 to 7, **characterized in that** for the measuring cassette, in addition to the body (1) and the base (9), a cover which at least partly covers the body (1) is provided, wherein recesses are provided at least in the region of the beam path of the excitation radiation and the fluorescence emission, so that the body (1) is not covered by the cover in this region.

9. Measuring system according to claim 8, in which the connection of the cover of the measuring cassette to the unit of the body (1) and base (9) is formed by hot caulking.

10. Measuring system according to one of claims 1 to 9, **characterized in that** the measuring cassette is provided with an electronic memory chip which can be written to and overwritten through the packaging even after packing of the measuring cassette.

11. Measuring system according to one of claims 1 to 10, **characterized in that** the measuring cassette is drawn in completely automatically by means of a toothed structure (13) and after completion of a measuring operation is ejected again completely automatically.

12. Method for detecting target molecules in a liquid sample by measurement of fluorescence emission after excitation in an evanescent field, in which the measuring system according to one of claims 1 to 11 is used.

13. Method according to claim 12, **characterized in that** the sample is a body fluid or an aqueous sample for foodstuffs or environmental analysis.

## Revendications

1. Système de mesure pour la détection de molécules cibles dans un échantillon liquide par mesure d'émission de fluorescence après excitation dans le champ évanescent, le système de mesure comprenant un dispositif de mesure et plusieurs cassettes de mesure à usage unique interchangeables pourvues d'une cellule de mesure de débit (12),
le dispositif de mesure comportant un logement d'insertion dans lequel l'une des cassettes de mesure à usage unique interchangeables est disposée au moins dans une position telle qu'une source lumineuse (17) disposée dans le dispositif de mesure peut fournir un rayonnement d'excitation qui impacte l'interface (19) échantillon liquide / cellule de mesure (12) de telle sorte que la réflexion totale du rayonnement d'excitation s'opère par la formation d'un champ évanescent dans l'échantillon liquide,
les cassettes à usage unique comprenant un corps (1) en matériau optiquement transparent et un fond (9) reposant contre la face inférieure du corps (1) et les cassettes à usage unique comportant, en outre, à l'extérieur de la cellule de mesure de débit (12), un orifice de remplissage d'échantillon (3), un canal à échantillon et des orifices de prise de pression (11), le canal à échantillon étant en contact fluidique avec la cellule de mesure (12) et comportant au moins l'un des dispositifs suivants : a) une zone pour la dissolution d'un traceur (5), b) une zone de mélange d'échantillon (4) et/ou c) une zone de détection de liquide, et la cellule de mesure (12) et le canal d'échantillon et les dispositifs a), b) et/ou c) étant constitués d'un évidement qui est prévu dans le corps (1), dans le fond (9) ou aussi bien dans le corps (1) que dans le fond (9), le corps (1) et le fond (9) des cassettes de mesure à usage unique étant respectivement un composant monobloc, chacun réalisé dans un matériau, les surfaces sur lesquelles le corps et le fond reposent l'un sur l'autre autour de l'évidement étant reliées directement et de manière étanche aux fluides par soudure au laser, des joints d'étanchéité à la pression étant prévus, permettant la fermeture étanche à la pression de l'orifice de remplissage d'échantillon (3) jusqu'à une pression ou dépression de +/- 100 mbar, et le dispositif de mesure présentant une source de pression qui, lorsque la cassette de mesure est insérée dans le logement, est raccordée aux orifices de prise de pression (11) du canal à échantillon et est apte à déplacer l'échantillon, au moyen d'une pression positive ou négative d'au moins +/- 100 mbar, à travers le canal à échantillon, la source lumineuse (17) pour le rayonnement d'excitation et le détecteur de fluorescence (20) étant disposés dans le système de mesure de telle sorte que l'excitation de fluorescence ainsi que la mesure de fluorescence s'effectuent par le haut à travers le matériau optiquement transparent du corps (1).

2. Système de mesure selon la revendication 1, **caractérisé en ce que** la cassette de mesure comporte, pour la fermeture de l'orifice de remplissage d'échantillon (3), un coulisseau qui est déplaçable d'une position ouverte dans une position fermée, le coulisseau étant pressé, de par la géométrie du guidage du coulisseau, contre un joint d'étanchéité compressif prévu au niveau de l'orifice de remplissage d'échantillon (3).

3. Système de mesure selon l'une des revendications 1 ou 2, **caractérisé en ce que** sont prévues dans la cellule de mesure (12) plusieurs zones de capture (21) différentes pour pouvoir répondre à plusieurs analytes au niveau des différentes zones de capture (21) en utilisant une seule source lumineuse (17).

4. Système de mesure selon l'une des revendications 1 à 3, **caractérisé en ce que** le dispositif de mesure contient des dispositifs permettant un mouvement relatif de la cassette de mesure par rapport à la source lumineuse (17) pour le rayonnement d'excitation afin d'amener ainsi différentes zones de la cellule de mesure dans la trajectoire du rayonnement d'excitation.

5. Système de mesure selon la revendication 4, **caractérisé en ce que** la source lumineuse (17) pour le rayonnement d'excitation est prévue dans le dispositif de mesure de telle sorte que le faisceau du rayonnement d'excitation impacte la cellule de mesure (12) à un angle de 90° par rapport à la direction du mouvement relatif de la cassette de mesure par rapport à la source lumineuse (17).

6. Système de mesure selon l'une des revendications 1 à 5, **caractérisé en ce qu'**il présente, à l'endroit auquel le rayonnement d'excitation pénètre (18) dans le corps (1), une lentille convergente (18b) permettant de diriger le faisceau du rayonnement d'excitation centralement le long de l'axe longitudinal de la cellule de mesure (12) toujours exactement à l'endroit désiré de l'interface (19) entre l'échantillon liquide et la surface du matériau transparent du corps (1) auquel doit être produite l'émission de fluorescence à mesurer.

7. Système de mesure selon l'une des revendications 1 à 6, **caractérisé en ce qu'**est prévue à une extrémité du canal à échantillon (8) dans le corps (1) ou dans le fond (9) une zone de déchets d'échantillons (7).

8. Système de mesure selon l'une des revendications 1 à 7, **caractérisé en ce qu'**est prévu sur la cassette de mesure, en plus du corps (1) et du fond (9), un couvercle qui recouvre le corps (1) au moins partiellement, des évidements étant prévus au moins dans la zone du faisceau du rayonnement d'excitation et de l'émission de fluorescence et de ce fait, le corps (1) n'est pas recouvert par le couvercle dans cette zone.

9. Système de mesure selon la revendication 8, dans lequel la liaison du couvercle de la cassette de mesure avec l'ensemble corps (1) et fond (9) a été réalisée par matage à chaud.

10. Système de mesure selon l'une des revendications 1 à 9, **caractérisé en ce que** la cassette de mesure est pourvue d'une puce mémoire électronique qui est également inscriptible et ré-inscriptible à travers le conditionnement après le conditionnement de la cassette de mesure.

11. Système de mesure selon l'une des revendications 1 à 10, **caractérisé en ce que** la cassette de mesure rentre de manière entièrement automatique à l'aide d'une structure dentée (13) et sort de nouveau entièrement automatiquement après la fin d'un processus de mesure.

12. Procédé de détection de molécules cibles dans un échantillon liquide après excitation dans le champ évanescent, dans lequel est mis en oeuvre le système de mesure selon l'une des revendications 1 à 11.

13. Procédé selon la revendication 12, **caractérisé en ce que** l'échantillon est un fluide corporel ou un échantillon aqueux pour l'analyse de denrées alimentaires ou de l'environnement.
